# EUROPEAN PATENT APPLICATION

(11) **EP 3 611 656 A1**
(43) Date of publication of application: **19.02.2020**
(21) Application number: 18189176.3
(22) Date of filing: 15.08.2018
(51) Int. Cl.: G06K 9/00

(54) **VISION SYSTEM FOR A MOTOR VEHICLE AND METHOD FOR GENERATING A TRAINED MODEL FOR THE VISION SYSTEM**

(71) Applicant: Veoneer Sweden AB, 447 83 Vårgårda (SE)
(72) Inventor: Jagbrant, Gustav, 58646 Linköping (SE); Cronvall, Per, 58332 Linköping (SE)
(74) Representative: Müller Verweyen

(57) **Abstract**

A vision system (1) for a motor vehicle comprises at least one imaging device (4), a data processing device (7) adapted to determine an exposure setting (18) for said imaging device (4) on the basis of images (5) taken by said imaging device (4), and an imaging device controller (17) controlled by said data processing device (7) to update the imaging device (4) setting to the determined exposure setting (18). The data processing device (7) determines said exposure setting (18) for said imaging device (4) by applying a trained model (20) which has been trained to output a suited exposure setting (18) for a given input image (5) taken by said imaging device (4).

## Description

The invention relates to a vision system for a motor vehicle, comprising at least one imaging device, a data processing device adapted to determine an exposure setting for said imaging device on the basis of images taken by said imaging device, and an imaging device controller controlled by said data processing device to update the imaging device setting to the determined exposure setting. The invention further relates to a method of generating a trained model for such vision system.

Traditionally, exposure controllers are based on analysis of image properties without the semantic content of the scene, thus not allowing the necessary adaptability.

In a camera based automotive system it is crucial to obtain high quality images to enable the correct actions to be taken. Due to the vast variety of light conditions that are encountered in the real world, the determination of suited exposure settings is a challenging problem. With increasing expectations on autonomous driving active systems (ADAS) to prevent accidents in all situations, it is crucial to handle even the most difficult light conditions. Especially, it is important to handle situations where a human driver's ability is compromised by difficult light conditions, e.g., when the driver is blinded by the glare from the sun or other strong light sources.

In a motor vehicle, the scenario and the ambient light conditions can change rapidly, e.g., entering a tunnel or the appearance of strong light sources like an approaching or breaking vehicle, or the glare of the sun. Typically, images are processed with respect to a specific application during driving, whereby the desired exposure can vary for different applications.

It is the purpose of the invention to provide an improved vision system that is able to effectively adapt to specific applications and scenarios.

The invention solves the problem with the subject matter of the independent claims.

According to the invention, it is suggested that the data processing device determines said exposure setting for said imaging device by applying a trained model which has been trained to output a suited exposure setting for a given input image taken by said imaging device, e.g., by a camera. The application of a trained model allows the analysis and consideration of the semantic content of the image. In contrast to prior art, not only image properties of images captured by the imaging device are used, but the suited exposure setting is determined by the trained model. The model has been trained to yield suited exposure settings in different scenarios, e.g., entering a tunnel, the appearance of strong light sources like an approaching or breaking vehicle, and/or the glare of the sun and/or for different applications, e.g., object detection, object classification etc.

In the motor vehicle, an image is captured and fed into the model, yielding an estimated exposure setting that is best suited for the application and/or the scenario. The imaging device controller updates the imaging device settings according to the estimation of the exposure setting by the trained model.

Preferably, the trained model comprises a classifier and/or a regressor that is adapted to output the suited exposure setting. A classifier can be trained to output a most suitable exposure mode, i.e., a target exposure mode, on the basis of one or more input images captured by the imaging device. The target exposure mode is and/or relates to the suited exposure setting. A regressor can be trained to output the most suitable exposure parameter or parameters, i.e., at least one target exposure parameter, on the basis of one or more input images captured by the imaging device. The target exposure parameters constitute and/or relate to the suited exposure setting. When running the deployed system, the target exposure mode and/or exposure parameter is used to update the image device setting with the target exposure mode and/or target exposure parameter.

It is advantageous that the trained model is adapted to output an exposure setting from a predefined set of exposure modes. In this embodiment, the imaging device is enabled to capture an image subsequent to said given input image with an appropriate exposure setting determined by the model from the pre-defined set of exposure modes. The predefined set of exposure modes is a set of exposure modes which can be suitable imaging device settings. Preferably, the model comprises a classifier adapted to classify any exposure mode from the predefined set of exposure modes to be an unsuitable exposure mode or an exposure mode that is and/or corresponds to the suited exposure setting.

Preferably, the trained model is adapted to output a set of continuous exposure parameters. In this embodiment, the imaging device is enabled to capture an image subsequent to said given input image with an appropriate exposure setting determined from the set of continuous exposure parameters. The set of continuous exposure parameters is a set of exposure parameters from which exposure settings can be determined. The set of continuous exposure parameters could for example relate to the exposure time, i.e., the set of continuous exposure parameters comprise said settings and/or said parameters are computable by the set of continuous exposure parameters. Preferably, the model comprises a regressor adapted to perform a regression in order to obtain a suited exposure setting from a set of continuous exposure parameters.

The invention suggests a method of generating a trained model for the vision system.

Advantageously, the method comprises capturing a plurality of image sequences with at least one imaging device, wherein each image sequence is recorded with a different exposure mode from a predefined set of exposure modes, performing an application procedure on said plurality of image sequences, evaluating each application procedure by using an application specific evaluation criterion, selecting a target exposure mode as the exposure mode yielding the best application performance, and training a classifier to output said target exposure mode on the basis of at least one image from every image sequence. In this embodiment, the model comprises a classifier. In the deployed system, the classifier to outputs the target exposure mode based on a captured image. The target exposure mode can directly be set by the imaging device controller as an exposure setting for capturing an image by the imaging device subsequent to said captured image.

By capturing image sequences with different exposure modes from the predefined set of exposure modes, the at least one imaging device, i.e., at least one image sensor thereof, will be exposed differently to light. The different exposures can result in that underexposed and/or overexposed images and/or image sequences are captured. The application procedure is performed on the differently exposed image sequences, yielding possibly different performances, depending on the exposure mode. The performances of the application procedure are preferably compared during the evaluation with respect to the application specific evaluation criterion. The exposure mode that corresponds to the image sequence yielding the best application performance, i.e., which meets the application specific evaluation criterion best, is defined as target exposure mode.

Preferably, the classifier is any one of a deep convolutional neural network, any kind of deep neural network, or any kind of machine learning model operating on any kind of learned or predefined image features in order to provide a reliable and effective classifier.

In an advantageous embodiment, the method comprises capturing a plurality of image sequences with at least one imaging device, wherein each image sequence is recorded with a set of semi-randomly chosen exposure parameters, performing an application procedure on said plurality of image sequences, evaluating each application procedure using an application specific evaluation criterion, estimating a target set of exposure parameters yielding the best application performance, and training a regressor to output said target exposure parameters on the basis of at least one image from every image sequence. In this embodiment, the model comprises a regressor. In the deployed system, the regressor preferably estimates and outputs the target exposure parameters based on a captured image and/or image sequence. The target exposure parameters can directly be used to estimate exposure settings to be set by the imaging device controller as an exposure setting for capturing an image by the imaging device subsequent to said captured image.

By capturing image sequences with a set of semi-randomly chosen exposure parameters, the at least one imaging device, i.e., at least one image sensor thereof, will be exposed differently to light. The different exposures can imply that underexposed and/or overexposed images and/or image sequences are captured. The application procedure is performed on the differently exposed image sequences, yielding possibly different performances. The performances of the application procedure are preferably compared during the evaluation with respect to the application specific evaluation criterion. The exposure parameters that are estimated to yield the best application performance, i.e., which meet the application specific evaluation criterion best, are defined as target exposure parameters.

Advantageously, the plurality of image sequences is captured with a plurality of different imaging devices, preferably mounted next to each other, wherein each imaging device records image sequences with different exposure settings. This embodiment provides data of the same scene with comparable ambient light conditions but different exposures to allow a particular effective collection of training data.

Preferably, the application procedure is an object detection procedure for detecting objects in the environment of said at least one imaging device. This embodiment provides a reliable application procedure that is comparable to application procedures in a deployed system. The object detection procedure can preferably yield detected objects or a detection range as a measurable, verifiable, and comparable results, which are advantageous results to train the model.

In a preferred embodiment, the application specific evaluation criterion is the number of true detections to provide a measurable, verifiable, and comparable application specific evaluation criterion.

Advantageously, ground truth data is generated using manual annotations to handle for example applications and/or scenarios with ambient light conditions that are particularly difficult to deal with. The ground truth data comprises images and suited exposure settings corresponding to said images. For example, by a manual annotation, an exposure setting can be assigned to an image that could not meet the application specific evaluation criterion, and/or where the application specific evaluation criterion is met poorly.

Preferably, the manual annotations categorize the images into a predefined set of classes, for example such as glare and/or tunnel-entrance amongst others to provide an advantageously comprehensive set of classes which require manual annotations.

In an advantageous embodiment, the exposure is set manually for each of the classes and used as target modes in said training in order to provide advantageous exposure settings that could not be determined or that are unlikely to be determined on an automated basis.

It is preferred that the training images for the different exposure modes are generated by differently degrading the performance of a single imaging device in order to provide an effective embodiment allowing a broad variety of applications. For example, the data is collected with a high-end imaging device which is capable of recording high quality, high dynamic range images. The training images for the different exposures are then generated by degrading the performance to simulate a target cost-effective imaging device with different exposure settings in a deployed system.

It is possible to use a plurality of imaging devices having different or the same optical properties and/or being directed towards different and/or the same scene.

In the following the invention shall be illustrated on the basis of preferred embodiments with reference to the accompanying drawings, wherein:

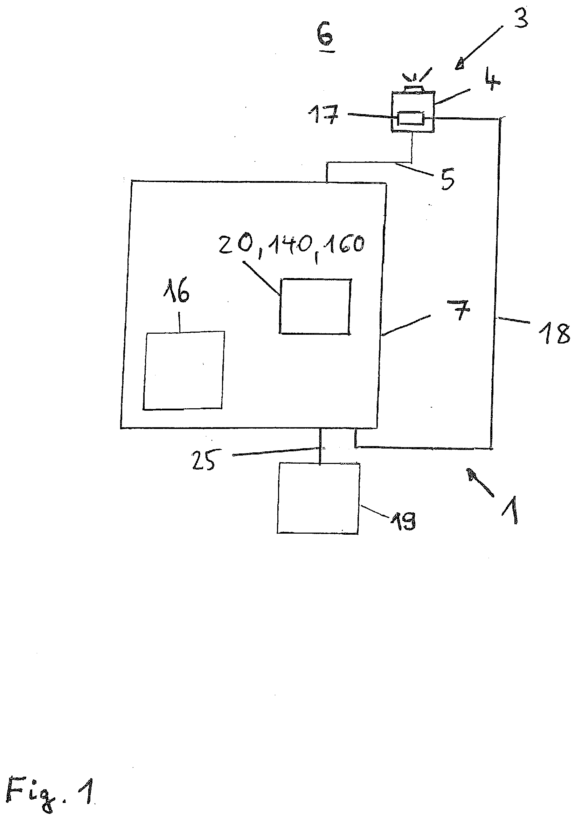

- Fig. 1: shows a schematic diagram of a vision system according to the present invention; and
- Figs. 2, 3: each show a flow diagram of a method for generating a trained model for the vision system.

The vehicle mounted vision system 1 is mounted in and/or to a motor vehicle and comprises an imaging apparatus 3 for capturing images 5 of a region 6 surrounding the motor vehicle, for example a region in front of the motor vehicle. The imaging apparatus 3 is for example directed forward, which typically is the principal locomotion direction of the motor vehicle.

Preferably the imaging apparatus 3 comprises one or more optical imaging devices 4, in particular one or more cameras, preferably operating in the visible and/or infrared wavelength range, where infrared covers near IR with wavelengths below 5 microns and/or far IR with wavelengths beyond 5 microns. In some embodiments the imaging apparatus 3 comprises a plurality of imaging devices 4 in particular forming a stereo imaging apparatus 3. In other embodiments only one imaging device 4 forming a mono imaging apparatus 3 can be used.

The imaging apparatus 3 is coupled to a data processing device 7 adapted to process the image data received from the imaging apparatus 3.

The data processing device 7 is preferably a digital device which is programmed or programmable and preferably comprises a microprocessor, microcontroller, digital signal processor (DSP), and/or a microprocessor part in a System-On-Chip (SoC) device.

The data processing device 7 preferably has access to, or comprises, a data memory 16 to store for example a sequence of images 5, i.e., an image sequence.

The data processing device 7 may comprise a dedicated hardware device, like a Field Programmable Gate Array (FPGA), a central processing unit (CPU), a graphics processing unit (GPU) and/or an Application Specific Integrated Circuit (ASIC), or an FPGA and/or ASIC part in a System-On-Chip (SoC) device, for performing certain functions, for example controlling the capture of images 5 by the imaging apparatus 3, receiving the electrical signal containing the image information from the imaging apparatus 3, rectifying or warping pairs of left/right images 5 into alignment and/or creating disparity or depth images 5. The data processing device 7, or part of its functions, can be realized by a System-On-Chip (SoC) device comprising, for example, FPGA, CPU, GPU, DSP, ARM and/or microprocessor functionality. The data processing device 7 and the memory device 16 are preferably realized in an on-board electronic control unit (ECU) and may be connected to the imaging apparatus 3 via a separate cable or a vehicle data bus. In another embodiment the ECU and one or more of the imaging devices 4 can be integrated into a single unit, where a one box solution including the ECU and all imaging devices 4 can be preferred. All steps from imaging, image processing to possible activation and/or control of a safety device 19 are preferably performed automatically and continuously during driving in real time.

Image and data processing carried out in the processing device 7 advantageously comprises identifying and preferably also classifying possible objects (object candidates) in front of the motor vehicle, such as pedestrians, other vehicles, bi-cyclists and/or large animals, tracking over time the position of objects or object candidates identified in the captured images, and activating or controlling at least one safety device 19 depending on an estimation performed with respect to a tracked object, for example on an estimated collision probability.

The data processing device 7 is advantageously adapted to activate adjust and/or control at least one safety device 19 through a control signal 25 in order to cause a corresponding action. The safety device 19 may comprise at least one active safety device and/or at least one passive safety device. In particular, the safety device 19 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

The invention is applicable to autonomous driving, where the vehicle is an autonomous vehicle adapted to drive partly or fully autonomously or automatically, and driving actions of the driver are partially and/or completely replaced or executed by the vehicle.

The vision system 1, in particular one or each of the imaging devices 4, comprises an imaging device controller 17, in particular a camera controller for setting different exposure settings 18 in the imaging device 4. An exposure setting 18 is a set of values needed for operating the imaging device 4, for example aperture value, exposure time etc. The imaging device controller 17 is controlled by the data processing device 7 and is adapted to set the imaging device 4 to a suited exposure setting 18 which is determined by the data processing device 7.

The data processing device 7 determines an exposure setting 18 for future imaging by the imaging device 4 on the basis of a present input image 5. The data processing device 7 determines the exposure setting 18 for the imaging device 4 by applying a trained model 20 adapted to output a suited exposure setting 18 for a given input image 5. The trained model 20 has been trained in advance by the manufacturer of the vision system 10 to output a best-suited exposure setting 18 for a given input image 5. The determined exposure setting 18 is transmitted from data processing device 7 to the imaging device controller 17 and the imaging device 4 is updated to the determined exposure setting 18 by the imaging device controller 17. The updating process described above is repeated periodically, or from time to time, during driving. In this manner, the setting of the imaging device 4 is adaptive to the conditions of the region 6 surrounding the motor vehicle at all times.

Generally, two different embodiments of exposure settings 18 of the imaging device 4 are possible. In a first embodiment, the imaging device 4 can be set to any one of a predetermined number of predefined exposure settings 18, called exposure modes 100A, 100B, ... from a predefined set of exposure modes. In a second embodiment, the exposure settings 18 are defined by continuous or quasi-continuous exposure parameters, called a set of continuous exposure parameters 200, such that there is an essentially infinite number of exposure settings. For example, the exposure setting 18 can be comprised of, and/or be a function of, one or more exposure parameters 200.

In the first embodiment, the trained model 20 preferably is, or comprises, a trained classifier 140 adapted to classify the input image 5 as belonging to one class from a plurality of classes corresponding to the predefined exposure settings 18. The trained model 20 chooses the exposure setting 18 corresponding to the one class resulting from the classification as the best-suited exposure setting 18 for the input image 5.

In the second embodiment, the trained model 20 preferably is, or comprises, a trained regressor 160 adapted to determine a particular set of exposure parameters 200 for each input image 5, for example by regression using a regression neural network.

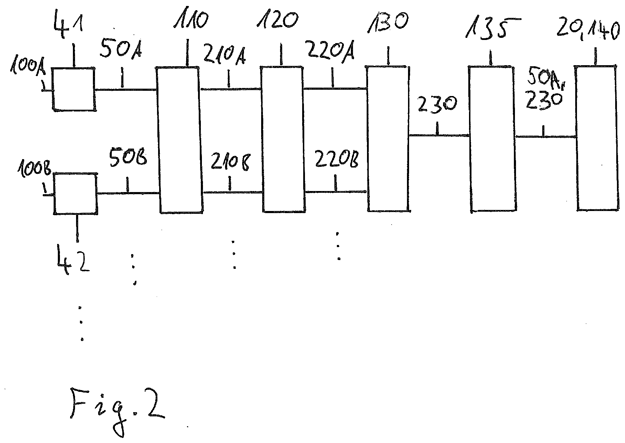

Figure 2 shows a flow diagram illustrating the generation of the classifier 140 described above by training. The generation or training of the classifier 140 is performed in advance by the manufacturer of the vision system 1, e.g., before installing the vision system 1 in the motor vehicle. The vision system 1 can be updated after the manufacture.

Image sequences 50A, 50B, ... are captured by at least one imaging device 41, 42, ..., preferably a plurality of for example N imaging device 41, 42, ... 4N, with N being the number of imaging devices 41, 42, ... 4N. N can preferably be larger than one. The at least one imaging device 41, 42, ... can be of the same type as the imaging device 4 deployed in the motor vehicle. In a preferred embodiment, the at least one imaging device 41, 42, ... is comprised by a data acquisition and processing setup at a manufacturing and/or training site different from the vehicle.

An exposure mode 100A, 100B, ... from a predefined set of exposure modes 100A, 100B is set by a non-shown imaging device controller as an exposure setting of each of the at least one imaging device 41, 42, .... The image sequences 50A, 50B, ... are recorded with preferably different exposure modes 100A, 100B, ... from the predefined set of exposure modes 100A, 100B, ....

The at least one imaging device 41, 42, ..., 4N can record image sequences 50A, 50B, ... and/or images 5 with M different exposure modes 100A, 100B, ... from the predefined set, yielding image sequences 50A, 50B, ..., or images 5, with N x M different exposure modes 100A, 100B, ... in total. It is possible that exposure modes 100A, 100B, .... are identical for a pair of images 5 and/or image sequences 50A, 50B, ....

Each image sequence 50A, 50B, ... comprises at least one image 5. In one embodiment, the plurality of image sequences 50A, 50B, ... can be captured with a single imaging device 41, whereby the image sequences 50A, 50B, ... can in particular be captured sequentially. In a preferred embodiment, the plurality of image sequences 50A, 50B, ... can be captured with a plurality of imaging devices 41, 42, .... It is possible that more than two image sequences 50A, 50B, ... are recorded sequentially by the same imaging device 41 of the at least one imaging device 41, 42, .... The plurality of imaging devices 41, 42, ... can be mounted next to each other and/or directed towards overlapping and/or coinciding scenes in order to provide comparable training data.

The captured image sequences 50A, 50B, ... are transmitted to an applicator 110. The applicator 110 performs an application procedure on the received plurality of image sequences 50A, 50B, .... The application procedure can for example comprise object detection, object classification, distance estimation, and/or velocity estimation, i.e., the applicator 110 can comprise an object detector, an object classifier, a distance estimator, and/or a velocity estimator. The application procedure for the training method can coincide with an application procedure in the deployed system, i.e., as performed in the vision system 1. The applicator 110 outputs application results 210A, 210B, ... to an evaluator 120. Each of the application results 210A, 210B, ... corresponds to one of the image sequences 50A, 50B, ....

Subsequent to the application procedure with the applicator 110, the evaluator 120 evaluates the results 210A, 210B, ... based on an application specific evaluation criterion. The evaluator 120 evaluates the application specific evaluation criterion for each of the image sequences 50A, 50B, ... based on the application results 210A, 210B, ... of the applicator 110. The application specific evaluation criterion can for example comprise the number of true detections, the number of true classifications, the detection range, and/or a comparison with data that is acquired differently from the imaging devices 41, 2, ..., e.g., position, velocity. For each of the image sequences 50A, 50B, ... the evaluator 120 outputs an evaluation result 220A, 220B, ..., for example a number, a set of numbers and/or another indicator indicating the application specific performance of each of the image sequences 50A, 50B, .... The evaluation results 220A, 220B, ... are transmitted to a selector 130.

The selector 130 preferably compares the evaluation results 220A, 220B, ... of the evaluator 120 to each other and/or to a specific target value for the application specific evaluation criterion. That is the application specific performance of the image sequences 50A, 50B, ... are compared to each other and/or to the target value. The selector 130 selects the image sequence 50A, 50B, ... yielding the best application performance, i.e., with the best application specific evaluation criterion. For example, the image sequence 50A with the largest number of true detections.

The selector 130 receives also the exposure modes 100A, 100B, ... from the imaging device 41, 42, ... (not shown in the Figures) and selects the exposure mode corresponding to the selected image sequence 50A, 50B, ... as a target exposure mode 230.

The target exposure mode 230 and the image sequence 50A, that is selected by the selector 130 are transmitted to a trainer 135. The trainer 135 trains the classifier 140 by transmitting the target exposure mode 230 and the selected image sequence 50A to the classifier 140 and by triggering training and/or learning action.

In another embodiment, the trainer 135 can also receive exposure modes 100A, 100B, ... and/or image sequences 50A, 50B, ... that are not selected by the selector 130 in order to indicate unsuited exposure modes 100 during training the classifier 140.

The classifier 140 is preferably trained to output the target exposure mode 230 on the basis of at least one image 5 from any image sequence 50A, 50B, .... I.e., in the deployed system, if any of the images 5 and/or image sequences 50 is input in the trained model 20, said model 20 outputs said target exposure mode 230. Preferably, the model 20 is trained to output said target exposure mode 230 if only minor changes and/or disturbances are present in the input image 5 and/or image sequence 50.

The applicator 110, the evaluator 120, the selector 130, and/or the trainer 135 are preferably software modules comprised by the data acquisition and processing setup at the manufacturing and/or training site. However, any one of the applicator 110, the evaluator 120, the selector 130, and/or the trainer 135 can be comprised in an advantageously dedicated hardware unit.

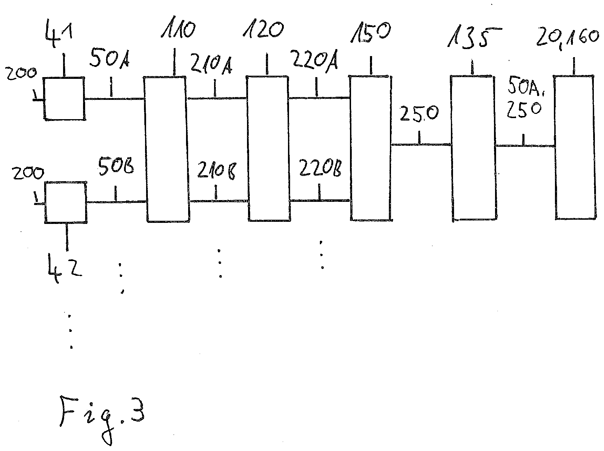

Figure 3 shows a flow diagram illustrating the generation of the regressor 160 described above by training. Figure 3 will be explained with respect to Figure 2, whereby the differences are outlined.

A non-shown imaging device controller sets an exposure setting of the at least one imaging device 41, 42, ... on the basis of a set of semi-randomly chosen exposure parameters 200. The set of exposure parameters 200 can comprise lens aperture, shutter speed, and/or exposure time. Each exposure parameter can be chosen randomly from a pre-defined interval that comprises typical values. The exposure setting of the imaging device 41, 42, ... can comprise the exposure parameters 200 and/or a function depending on the exposure parameters 200. The image sequences 50A, 50B, ... are recorded on the basis of the semi-randomly chosen set of exposure parameters 200. It is possible that more than two image sequences 50A, 50B, ... are recorded by the imaging device 4 and/or that exposure parameters are identical for a pair of images 5 and/or image sequences 50A, 50B,

Each imaging device 41, 42 can sequentially record image sequences 50A, 50B, ... and/or images 5 with M different exposure parameters from the set of semi-randomly chosen exposure parameters 200, yielding N x M image sequences 50, or images 5, with different exposure parameters in total.

The processing of the captured image sequences 50A, 50B, ... is analog to the processing as described with respect to Figure 2 up to the output of the evaluator 120. In Figure 3, the evaluation results 220A, 220B, ... are transmitted to an estimator 150.

The estimator 150 estimates a target set of exposure parameters 250 yielding the best application performance. The selector 130 receives also the exposure parameters 200 from the imaging device 41, 42, ... (not shown in the Figures). The application specific performance of the image sequences 50A, 50B, ..., i.e., the evaluation results 220A, 220B, ..., are preferably inter- and/or extrapolated by the estimator 150 in order to estimate the best-suited exposure parameters 200 as target set of exposure parameters 250. The target set of exposure parameters 250 can comprise lens aperture, shutter speed, and/or exposure time and/or can be a single value or a set comprising a plurality of values. The estimator 150 selects the image sequence 50A, 50B, ... yielding the best application performance, i.e., with the best application specific evaluation criterion. For example, the image sequence 50A with the largest number of true detections.

The target set of exposure parameters 250 and the image sequence 50A, that is selected by the estimator 150 are transmitted to a trainer 135. The trainer 135 trains the regressor 160 by transmitting the target set of exposure parameters 250 and the selected image sequence 50A to the regressor 160 and by triggering training and/or learning action.

The regressor 160 is trained to output target exposure parameters 250 on the basis of at least one image 5 from every image sequence 50A, 50B, .... I.e., in the deployed system, if any of the images 5 and/or image sequences 50A, 50B, ... is input in the trained model 20, said model 20 is trained to output said target exposure parameters 250.

The estimator 150 is preferably a software module comprised by the data acquisition and processing setup at the manufacturing and/or training site. However, the estimator 150 can be comprised in an advantageously dedicated hardware unit.

## Claims

1. A vision system (1) for a motor vehicle, comprising:
- at least one imaging device (4);
- a data processing device (7) adapted to determine an exposure setting (18) for said imaging device (4) on the basis of images (5) taken by said imaging device (4); and
- an imaging device controller (17) controlled by said data processing device (7) to set the imaging device (4) to the determined exposure setting (18),
**characterized in that**
- the data processing device (7) determines said exposure setting (18) for said imaging device (4) by applying a trained model (20) which has been trained to output a suited exposure setting (18) for a given input image (5) taken by said imaging device (4).

2. The vision system (1) as claimed in claim 1, **characterized in that** said trained model (20) comprises a classifier (140) and/or a regressor (160).

3. The vision system (1) as claimed in any one of the preceding claims, **characterized in that** said trained model (20) is adapted to output an exposure setting (18) from a pre-defined set of exposure modes (100A, 100B, ...).

4. The vision system (1) as claimed in any one of the preceding claims, **characterized in that** said trained model (20) is adapted to output a suited set of continuous exposure parameters (200).

5. A method of generating a trained model for the vision system (1) as claimed in any one of the preceding claims.

6. The method as claimed in claim 5, comprising:
- capturing a plurality of image sequences (50A, 50B, ...) with at least one imaging device (41, 42, ...), wherein each image sequence (50A, 50B, ...) is recorded with a different exposure mode (100A, 100B, ...) from a predefined set of exposure modes (100A, 100B, ...);
- performing an application procedure on said plurality of image sequences (50A, 50B, ...);
- evaluating each application procedure by using an application specific evaluation criterion;
- selecting a target exposure mode (230) as the exposure mode (100A, 100B, ...) yielding the best application performance; and
- training a classifier (140) to output said target exposure mode (230) on the basis of at least one image (5) from every image sequence (50A, 50B, ...).

7. The method as claimed in claim 6, wherein said classifier (140) is any one of
- a deep convolutional neural network;
- any kind of deep neural network;
- any kind of machine learning model operating on any kind of learned or predefined image features.

8. The method as claimed in claim 5, comprising:
- capturing a plurality of image sequences (50A, 50B, ...) with at least one imaging device (41, 42, ...), wherein each image sequence (50A, 50B, ...) is recorded with a set of semi-randomly chosen exposure parameters (200);
- performing an application procedure on said plurality of image sequences (50A, 50B, ...);
- evaluating each application procedure using an application specific evaluation criterion (120);
- estimating a target set of exposure parameters (250) yielding the best application performance; and
- training a regressor (160) to output said target exposure parameters (250) on the basis of at least one image (5) from every image sequence (50A, 50B, ...).

9. The method as claimed in any one of claims 5 to 8, wherein said plurality of image sequences (50A, 50B, ...) is captured with a plurality of different imaging devices (41, 42, ...), preferably mounted next to each other, wherein each imaging device (41, 42, ...) records image sequences (50A, 50B, ...) with different exposure settings (18).

10. The method as claimed in any one of claims 5 to 9, **characterized in that** said application procedure is an object detection procedure for detecting objects in the environment (5) of said at least one imaging device (41, 42, ...).

11. The method as claimed in claim 10, **characterized in that** said application specific evaluation criterion is the number of true detections.

12. The method as claimed in any one of claims 5 to 11, **characterized in that** ground truth data is generated using manual annotations.

13. The method as claimed in claims 12, **characterized in that** said manual annotations categorize the images (5) into a predefined set of classes.

14. The method as claimed in claim 13, **characterized in that** the exposure is set manually for each of the classes and used as target setting in said training.

15. The method as claimed in any one of claims 6 to 14, **characterized in that** the training images (5) for the different exposure settings are generated by differently degrading the performance of a single imaging device (41).
